# EUROPEAN PATENT APPLICATION

(11) **EP 4 258 521 A1**
(43) Date of publication of application: **11.10.2023**
(21) Application number: 21902915.4
(22) Date of filing: 07.05.2021
(51) Int. Cl.: H02K 15/02, H02K 1/22, H02K 1/27

(54) **PERMANENT MAGNET SYNCHRONOUS MOTOR AND PRODUCTION METHOD FOR SAME**

(30) Priority: 07.12.2020 JP 2020202798
(71) Applicant: Hitachi Industrial Products, Ltd., Tokyo 101-0021 (JP)
(72) Inventor: TAMIYA, Shuichi, Tokyo 101-0021 (JP); TAKISAWA, Hayato, Tokyo 101-0021 (JP); SATO, Misato, Tokyo 101-0021 (JP)
(74) Representative: Mewburn Ellis LLP
(86) International application number: PCT/JP2021/017530
(87) International publication number: WO 2022/123808

(57) **Abstract**

The present invention provides a permanent magnet synchronous motor that has a plurality of insertion holes for permanent magnets at each magnetic pole and can improve a resin injection operation that fixes the permanent magnets, and a production method for the permanent magnet synchronous motor. In the permanent magnet synchronous motor that includes: a stator; an embedded permanent magnet-type rotor in which permanent magnets are inserted into a plurality of insertion holes that are disposed in the circumferential direction of a rotor core; and a shaft fixed to the rotor, a pair of end plates that press both end surfaces of the permanent magnets at both ends of the rotor core are provided, one of the pair of end plates includes a first through hole that is a single through hole that communicates with the plurality of insertion holes, and the first through hole and the plurality of insertion holes are filled with resin.

## Description

### Technical Field

The present invention relates to a permanent magnet synchronous motor and a production method for the permanent magnet synchronous motor. More specifically, the present invention relates to a permanent magnet synchronous motor that has a plurality of insertion holes for permanent magnets at each magnetic pole and a production method for the permanent magnet synchronous motor.

### Background Art

Patent Literature 1 discloses a permanent magnet synchronous motor that has a plurality of insertion holes for permanent magnets at each magnetic pole, and Patent Literature 2 discloses a method for fixing permanent magnets into a rotor core of a permanent magnet synchronous motor.

Figure 16 of Patent Literature 1 discloses the permanent magnet synchronous motor including a stator, an embedded permanent magnet-type rotor in which an N pole and an S pole are configured by permanent magnets embedded into cores, and a shaft to which the rotor is fixed. The cores have first cores and second cores in the outer circumferences of the first cores. The respective magnetic poles of the cores have bridges that connect the first cores and the second cores to each other, and a plurality of insertion holes surrounded by the first cores, the second cores, and the bridges and into which the permanent magnets are inserted. The permanent magnets have the gaps of the insertion holes between the permanent magnets and the bridges.

Figure 7 of Patent Literature 2 discloses that permanent magnets are inserted into a rotor core, and after end plates are coupled to both sides of the rotor core, resin is injected from resin injection portions of the end plate.

### Citation List

### Patent Literature

PTL 1: Japanese Unexamined Patent Application Publication No. 2019-75923
PTL 2: Japanese Unexamined Patent Application Publication No. 2012-120422

### Summary of Invention

### Technical Problem

Patent Literature 1 discloses that the permanent magnet synchronous motor has a plurality of insertion holes for permanent magnets at each magnetic pole, but does not disclose the injection of resin that is an adhesive and the fixing of end plates.

Patent Literature 2 does not disclose that the permanent magnet synchronous motor has a plurality of insertion holes for permanent magnets at each magnetic pole, and does not disclose a finding of how the efficient resin injection operation is to be performed for the configuration of Patent Literature 1.

An object of the present invention is to provide a permanent magnet synchronous motor that has a plurality of insertion holes for permanent magnets at each magnetic pole and can improve a resin injection operation that fixes the permanent magnets, and a production method for the permanent magnet synchronous motor.

### Solution to Problem

In order to achieve the above problems, a permanent magnet synchronous motor and a production method therefor, of the present invention are configured so as to be described in the scope of claims.

To be more specific, the permanent magnet synchronous motor include: a stator; an embedded permanent magnet-type rotor in which permanent magnets are inserted into a plurality of insertion holes that are disposed in a circumferential direction of a rotor core; and a shaft to which the rotor is fixed. In the permanent magnet synchronous motor, a pair of end plates that press both end surfaces of the permanent magnets at both ends of the rotor core are provided, one of the pair of end plates includes a first through hole that is a single through hole that communicates with the plurality of insertion holes, and the first through hole and the plurality of insertion holes are filled with resin.

Further, a production method for a permanent magnet synchronous motor includes: a first step in which a first clamp, a first end plate, a rotor core, permanent magnets, a second end plate, and a second clamp are sequentially stacked while being positioned and are shrink fitted to a rotation shaft; and a second step in which a syringe is inserted by using the through hole as a guide to inject resin that is an adhesive. In the production method for a permanent magnet synchronous motor, the first step uses, as the first end plate, an end plate including the through holes that communicate with permanent magnet insertion holes, uses, as the second end plate, an end plate not including the through holes that communicate with the permanent magnet insertion holes, and causes a first through hole that is a single through hole of the first end plate, to communicate with two gaps caused between the permanent magnets and the insertion holes as the positioning, and the second step inserts the syringe by using the first through hole as a guide to inject the resin, thereby releasing air from the different through hole that is not the first through hole. Advantageous Effects of Invention

According to the present invention, a resin injection operation can be performed efficiently in a permanent magnet synchronous motor in which a plurality of insertion holes of the permanent magnet are provided at each magnetic pole.

Objects, configurations, and effects other than the above will be apparent from the description of the following embodiments.

### Brief Description of Drawings

Figure 1 is a rotation axis direction cross-sectional view of a permanent magnet synchronous motor (PMSM);
Figure 2 is an exploded perspective view of a rotor;
Figure 3 is a diagram illustrating an end surface of the rotor of a first example;
Figure 4 is an explanatory view of a resin injection process; and
Figure 5 is a diagram illustrating the end surface of the rotor of a second example.

### Description of Embodiments

### Example 1

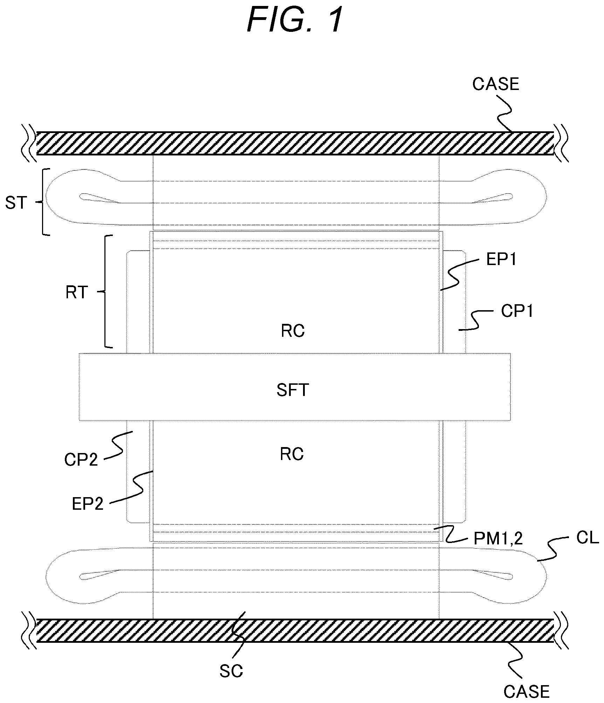

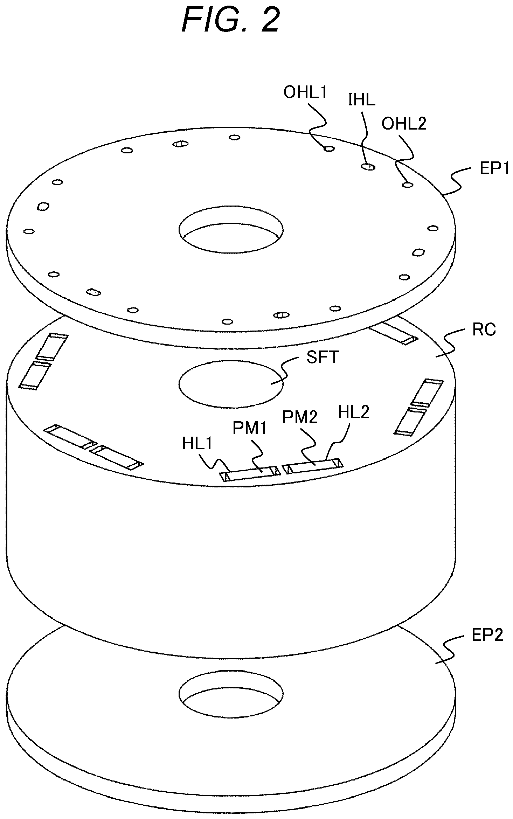

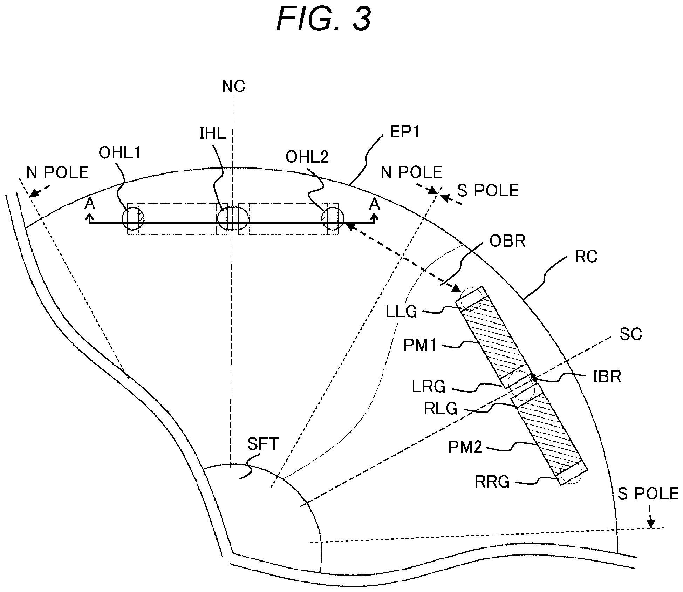

A dynamo-electric machine of a first example is a permanent magnet synchronous motor (PMSM) in which permanent magnets are embedded into a rotor. Figure 1 is a rotation axis direction cross-sectional view of the permanent magnet synchronous motor (PMSM), Figure 2 is an exploded perspective view of the rotor, and Figure 3 is a diagram illustrating the end surface of the rotor.

### [Basic configuration]

The PMSM includes a rotation shaft SFT, a stator ST, a rotor RT, and a casing CASE.

The casing CASE has a cylindrical shape, and the stator ST is accommodated by and fixed to its inside diameter surface.

The stator ST has a cylindrical shape, and a stator coil CL is inserted into a stator core SC.

In the rotor RT, permanent magnets PM (PM1, PM2) are embedded in the circumferential direction in the outer circumference of a rotor core RC in cylindrical shape. In the present example, the permanent magnets PM1, PM2 are inserted into insertion holes HL1, HL2 in the same direction, the permanent magnets PM1, PM2 of opposite polarities are inserted into the adjacent insertion holes HL1, HL2, and the N pole and the S pole are alternately exhibited. The N pole center line is NC, and the S pole center line is SC.

In the rotation shaft SFT, the rotor RT is shrink fitted to the rotation shaft SFT, and is supported by the casing CASE or a bearing (not illustrated) fixed to a blanket, not illustrated.

### [Rotor]

In the rotor RT, a pair of insertion holes HL1 and HL2 are provided on the left and right sides with respect to each of the magnetic pole center lines NC and SC at predetermined angles. In the present example, the insertion holes HL1, HL2 are of a shape that is long toward the adjacent insertion holes, and have short axes disposed to be substantially parallel with each of the magnetic pole center lines NC and SC.

A plurality of permanent magnets PM1 and PM2 are inserted into the respective insertion holes HL1 and HL2 in the axial direction, and the short axes of the permanent magnets PM are disposed to be substantially parallel with each of the magnetic pole center lines NC and SC. It should be noted that in the present example, the permanent magnets PM at each magnetic pole include a pair of permanent magnets PM (PM1 and PM2) disposed at a total of two positions, but when they can be symmetrically disposed with respect to each of the magnetic pole center lines NC and SC, they can also be disposed at three positions or more.

In addition, the rotor core RC includes a first core RC1 that is on the inside of the insertion holes HL1 and HL2, a second core RC2 that is on the outside of the insertion holes HL1 and HL2, a first bridge OBR that is rather wide and partitions the insertion holes in the adjacent magnetic poles (the insertion hole HL1 in the N pole and the adjacent insertion hole HL2 in the S pole), and a second bridge IBR that partitions the insertion holes in the same magnetic pole (the insertion hole HL1 in the N pole and the insertion hole HL2 in the same N pole). It should be noted that in the first bridge OBR of the present example, the second bridge IBR is narrower than the first bridge OBR, and the second bridge IBR is disposed at a position through which each of the magnetic pole center lines NC and SC passes.

### [Gaps]

There are gaps between the permanent magnets PM1, PM2 and the first bridge OBR, and there are gaps between the permanent magnets PM1, PM2 and the second bridge IBR. In the present example, gaps LLG and RRG between the first bridge OBR and the permanent magnets PM1, PM2 are wider than gaps LRG, RLG between the second bridge IBR and the permanent magnets PM1, PM2 (not illustrated). This releases the air well, so that the injection is enabled for a short time and the bonding ability of the filled resin can be high.

### [End plates]

As illustrated in Figure 1, the right end surface of the rotor RT (in particular, the insertion holes HL1, HL2) is covered by an end plate EP1 in donut shape, and the left end surface of the rotor RT (in particular, the insertion holes HL1 and HL2) is covered by an end plate EP2 in donut shape.

The end plate EP1 includes two types of through holes including through holes OHL and IHL at positions corresponding to the insertion holes HL1 and HL2 of the rotor core RC. In particular, the through hole OHL communicates at least in part with each of the gaps LLG and RRG between the first bridge OBR and the permanent magnets PM1, PM2, and the through hole IHL is a single through hole, and communicates at least in part with both of the gaps LRG, RLG between the second bridge OBR and the permanent magnets PM1, PM2. In the present example, the through hole IHL has a larger size (diameter or the like) than through holes OHL1, OHL2.

The end plate EP2 is planar at positions opposite the insertion holes HL1 and HL2 of the rotor core RC, and closes these insertion holes HL1 and HL2.

### [Rotor assembling process]

Next, the assembling process of the rotor of the present example will be described. First, a clamp CP2, the end plate EP2, the rotor core RC, and the permanent magnets PM are stacked while being positioned. Next, the end plate EP1 and a CP1 are stacked while being positioned. The clamps CP1, CP2, the end plates EP1, EP2, the rotor core RC, and the permanent magnets PM are shrink fitted and fixed to the shaft SFT. Then, a syringe is inserted by using the through hole IHL of the end plate EP1 as a guide, and the resin that is an adhesive is injected, thereby filling the resin into the gaps LRG and RLG.

### [Resin injection process]

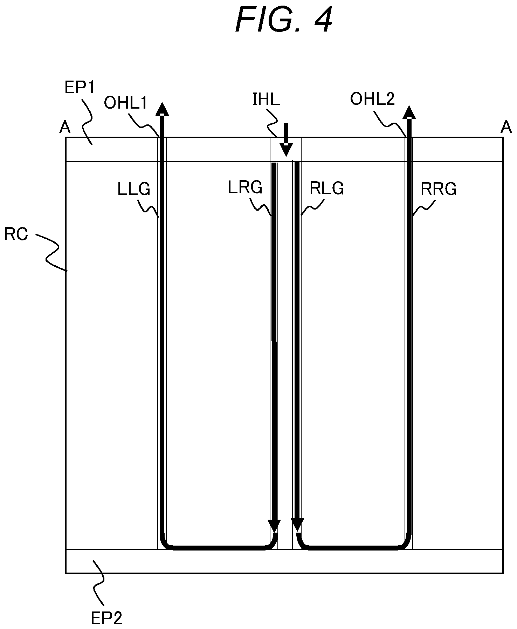

Next, referring to the resin injection process explanatory view of Figure 4, a principle in which the resin injection efficiency is increased in the rotor configuration of the present example will be described. It should be noted that the diagram is a rotation axis direction partial cross-sectional view of magnet insertion opening portions for one pole of the rotor RT.

In the resin injection process, the rotor RT is installed such that the rotation shaft SFT is in the vertical direction and the end plate EP1 is an upper surface.

As illustrated in Figure 4, in the present example, in the resin injection, the syringe opening for injecting the resin is inserted into the single through hole IHL that communicates with two gaps LRG, RLG of the rotor core RC, so that the syringe can be stabilized. The resin injected from the single through hole IHL is injected into the gaps LRG, RLG of the rotor core RC, and is injected to the end portion (the inner surface of the end plate EP2) in the vertical direction by the action of gravity. When the resin is injected to the end portion (the inner surface of the end plate EP2) in the vertical direction of the rotor core RC, since the inner surface of the end plate EP2 is flat, the resin is spread in the horizontal direction (circumferential direction) through the gaps LRG, RLG between the permanent magnets PM and the rotor core RC, and is injected also into the gaps LLG, RRG with the bridge OBR on the opposite side of the permanent magnets PM, so that the resin is penetrated into all of the gaps LLG, LRG, RLG, RRG between the permanent magnets PM and the rotor core RC. At this time, the air in the gap is released from the through hole OHL of the end plate EP1 that is not used for the resin injection, so that the resin immediately fills the inside of the gap, and the air is unlikely to remain in the resin.

In addition, the through hole IHL of the present example is disposed to communicate at least in part with both of two gaps LRG, RLG, so that it functions as a guide of both of two gaps LRG, RLG, and the resin can be injected at the same time by one syringe insertion operation. Thus, the resin injection efficiency is improved.

It should be noted that when the resin in the amount in which the resin can be seen from the through holes IHL, OHL is injected, it is possible to visually check that the rotor RT has been filled with the resin. Since the process for previously mounting the end plates ET1, ET2 and the clamps CP1, CP2 before the resin injection is adopted, it is difficult to identify whether the resin injection (the fixing of the permanent magnets PM) has been completed, but when the resin can be visually checked from the through holes IHL, OHL, any defective products can be prevented from being made to flow to the post-process.

### Example 2

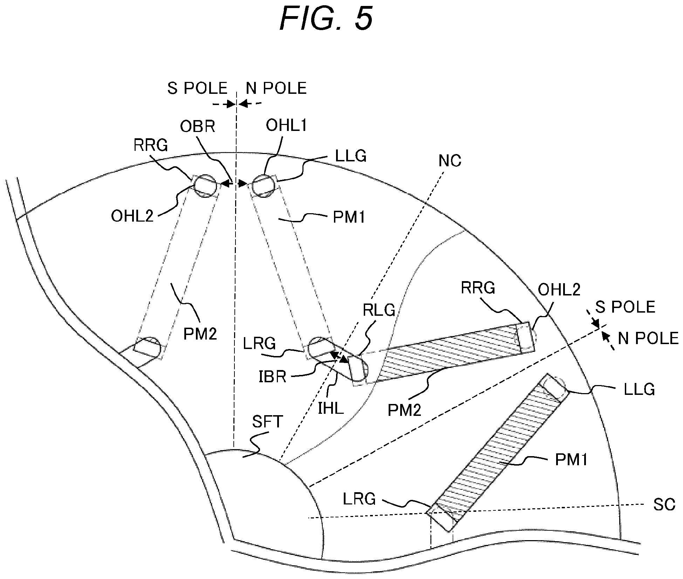

In the first example, the short axes of the permanent magnets PM are disposed to be substantially parallel with each of the magnetic pole center lines NC, SC, but in the second example, as illustrated in Figure 5, the short axes of the permanent magnets PM and the through holes HL1, HL2 direct to each of the magnetic pole center lines. That is, among the adjacent gaps, the gaps LLG, RRG adjacent through the first bridge OBR are disposed on the inside diameter side, the gaps LRG, RLG adjacent through the second bridge IBR are disposed on the outside diameter side, the through holes OHL1, OHL2 of the end plate EP1 are disposed on the inside diameter side, and the through hole IHL of the end plate EP1 is disposed on the outside diameter side. The second example is the same as the first example in all of other configurations, the rotor assembling process, and the injection method.

Like the first example, the gaps LRG, RLG are disposed to communicate with the single through hole IHL of the end plate EP1, so that the single through hole IHL functions as a guide of both of two gaps LRG, RLG, and the resin can be injected at the same time by one syringe insertion operation. Thus, the resin injection efficiency is improved.

Like the first example, the air in the gap is released from the through hole OHL of the end plate EP1 that is not used for the resin injection, so that the resin immediately fills the inside of the gap, and the air is unlikely to remain in the resin.

In the above first and second examples, the gaps RRG, LLG that sandwich the second bridge OBR are communicated with the through holes OHL, OHL2, respectively, on a one-to-one basis, but the present invention also encompasses that the through holes OHL1, OHL2 are a single through hole.

It should be noted that the present invention is not limited to the examples described above, and includes various modification examples.

For example, the examples described above have been described in detail to simply describe the present invention, and are not necessarily required to include all the described configurations. In addition, part of the configuration of one example can be replaced with the configurations of other examples, and in addition, the configuration of the one example can also be added with the configurations of other examples. In addition, part of the configuration of each of the examples can be subjected to addition, deletion, and replacement with respect to other configurations.

### Reference Signs List

SFT... rotation shaft,
ST...stator,
RT... rotor,
CASE...casing,
SC...stator core,
CL...stator coil,
RC...rotor core,
PM (PM1, PM2)...permanent magnet,
HL (HL1, HL2)...insertion hole,
NC...N pole center line,
SC...S pole center line,
OBR...first bridge,
IBR...second bridge,
LLG, RRG, LRG, RLG...gap,
OHL (OHL1, OHL2)...through hole,
CP (CP1, CP2)...clamp

## Claims

1. A permanent magnet synchronous motor that includes: a stator; an embedded permanent magnet-type rotor in which permanent magnets are inserted into a plurality of insertion holes that are disposed in the circumferential direction of a rotor core; and a shaft to which the rotor is fixed,
wherein a pair of end plates that press both end surfaces of the permanent magnets at both ends of the rotor core are provided,
wherein one of the pair of end plates includes a first through hole that is a single through hole that communicates with the plurality of insertion holes, and
wherein the first through hole and the plurality of insertion holes are filled with resin.

2. The permanent magnet synchronous motor according to claim 1,
wherein the other of the pair of end plates is planar.

3. The permanent magnet synchronous motor according to claim 2,
wherein among the plurality of insertion holes, the permanent magnets in the same magnetic pole are inserted into the plurality of insertion holes that communicate with the first through hole.

4. The permanent magnet synchronous motor according to claim 3,
wherein among the plurality of insertion holes, the first through hole is at a position through which a magnetic pole center line passes.

5. The permanent magnet synchronous motor according to claim 4,
wherein the plurality of through holes include a second through hole having a smaller size than the first through hole that communicates with the plurality of insertion holes.

6. The permanent magnet synchronous motor according to claim 1 or 2,
wherein the short sides of the plurality of insertion holes include gaps between the short sides of the plurality of insertion holes and the permanent magnets, and
wherein the first through hole communicates in part with the gaps.

7. The permanent magnet synchronous motor according to claim 6,
wherein the plurality of insertion holes have a long shape toward the adjacent insertion holes,
wherein the rotor core includes a first bridge portion that is a core between the short sides of the adjacent insertion holes in the same magnetic pole, and
wherein the first through hole communicates with gaps between the first bridge portion and the permanent magnets.

8. The permanent magnet synchronous motor according to claim 7,
wherein the first bridge portion is on the magnetic pole center line.

9. The permanent magnet synchronous motor according to claim 7 or 8,
wherein the rotor core includes a second bridge portion that is a core between the short sides of the adjacent insertion holes in different magnetic poles, and
wherein the plurality of through holes include the second through hole that is a through hole that communicates with only one of gaps between the second bridge portion and the permanent magnets.

10. The permanent magnet synchronous motor according to claim 1 or 2,
wherein a pair of clamps that sandwich the pair of end plates are provided.

11. A production method for a permanent magnet synchronous motor comprising:
a first step in which a first clamp, a first end plate including through holes, a rotor core, permanent magnets, a second end plate, and a second clamp are sequentially stacked while being positioned and are shrink fitted to a rotation shaft; and
a second step in which a syringe is inserted by using the through hole as a guide to inject resin that is an adhesive,
wherein the first step uses, as the first end plate, an end plate including the through holes that communicate with permanent magnet insertion holes, uses, as the second end plate, an end plate not including the through holes that communicate with the permanent magnet insertion holes, and causes a first through hole that is a single through hole of the first end plate, to communicate with two gaps caused between the permanent magnets and the permanent magnet insertion holes as the positioning, and
wherein the second step inserts the syringe by using the first through hole as a guide to inject the resin, thereby releasing air from the different through hole that is not the first through hole.
